# EUROPEAN PATENT APPLICATION

(11) **EP 4 446 697 A1**
(43) Date of publication of application: **16.10.2024**
(21) Application number: 24165067.0
(22) Date of filing: 21.03.2024
(51) Int. Cl.: G01B 11/27, G01B 11/30, G02B 27/09

(54) **STANDARD-LIGHT GENERATOR FOR STRAIGHTNESS MEASUREMENT, METHOD OF PROVIDING A STANDARD FOR STRAIGHTNESS MEASUREMENT, AND STRAIGHTNESS MEASUREMENT APPARATUS**

(30) Priority: 10.04.2023 JP 2023063304
(71) Applicant: ADTEC Engineering Co., Ltd., Tokyo 105-0001 (JP)
(72) Inventor: TANAKA, Yoneta, Tokyo, 1050001 (JP); GOTOH, Manabu, Kanagawa, 227-0035 (JP)
(74) Representative: Maiwald GmbH

(57) **Abstract**

A standard-light generator for straightness measurement has a light source, and a light shielding plate disposed at a position irradiated with light from the light source. The light shielding plate has a circular-ring-shaped light transparency slit. The light source is disposed on a slit axis through the center of the circumference of the light transparency slit and perpendicular to the light shielding plate, and directed so that the whole area of the light transparency slit is irradiated with light from the light source. In measuring straightness, observed are irradiances by diffraction light waves from the light transparency slit on a first, second and third observation planes respectively different in distance to the light shielding plate. Each position of each irradiance peak due to interference of the diffraction light waves is specified.

## Description

### [Technical Field]

The invention of this application relates to a technology for measuring the straightness of an object.

### [Background Art]

Measurement of straightness of an object is often required in some fields in some industries. In some kinds of devices used in manufacturing some kinds of products, for example, straightness of parts within those devices is measured for confirming sufficient straightness secured thereon in consideration of enhancing dimensional accuracy of the manufactured products.

Measurement of straightness needs a standard. A surface of an object is compared to a standard securing a straightness. The deviation from the standard is dealt as the measured straightness. Straightedges are known to provide straightness standards. Among the straightedges regulated in JIS B 7514, for example, the class A must secure the straightness of 2+L/250 µm, and the class S must secure the straightness of 1+L/500 µm, where L is an effective length (unit: mm). Assuming the effective length is 300 mm, for example, a class-A straightedge has a straightness of 3.2 µm or less, and a class-S straightedge has a straightness of 1.6 µm or less. Straightness is volume of unevenness to a straight line extending in a direction along which it should be straight. It is obtained by adding the maximum depth among recessions from the straight line and the maximum height among protrusions from the straight line.

### [Summary of the Invention]

### [Problems the invention will solve]

Usually about one-meter square size platens and base plates, which are often adopted in manufacturing devices, are fabricated with such a processing machine as surface grinding machine. Conventionally, flatness accuracy of such platens and base plates has been supposedly secured by the reproducibility of the running straightness in processing machines. As platens and base plates have been larger in scale and required higher flatness accuracy, however, it has been difficult to secure those flatness accuracy by the running straightness of processing machines. Flatness accuracy, which means straightness in two dimensions, is sometimes required to be straightness as high as, for example, 0.1 micrometer. Parts suppliers supplying parts to processing machine (e.g., grinding machine) makers have been intending to satisfy the requirement by improving their precise processing techniques. However, it cannot be verified enough in many cases whether completed products (parts in machines) secure such a high straightness. Conventional straightedges, for example, which have only one-to-several-micrometers straightness even if the class-S, cannot satisfy the requirement.

While straightedges are tools where "linearity" as standard is realized by machining, we can consider light (i.e., an electromagnetic wave) as a physics phenomenon securing "linearity". Excluding such an abnormal phenomenon as a gravitational lens, i.e., at least on the earth, light travels straight. Particularly, laser sources emit thin light beams traveling straight. Considering this, JP2019-200168A (hereafter, Patent Document 1) proposes an apparatus measuring straightness by using a laser source.

However, laser beams, which have divergence angles though small, are not so small in cross section diameter. For example, beams emitted from semiconductor laser sources, which are comparatively cheap and easy in handling, generally have diameters of 1 to several millimeters in cross sections. While "diameter" in a beam is under the assumption that its cross-section shape is circular, it corresponds to a length of the long axis if the cross section is oval. If a cross sectional shape is different from a circle or an oval, it is the length in the longest direction.

In the measurement apparatus disclosed in Patent Document 1, a light beam from a laser source is returned by a corner cube prism and enters into an optical position sensor. The corner cube prism is movable in the direction of the beam from the laser source. Directing the length direction of a long object to the laser bean direction (moving direction of the prism), this apparatus measures straightness of the object.

Taking into consideration that the cross-section diameter of the laser beam is one to several millimeters in Patent Document 1, however, apparently the disclosed apparatus could only perform a rather rough measurement. Laser beams often have energy peaks at the centers in those cross-section distributions, e.g., Gaussian distributions. Assuming that such a laser beam enters into the optical position sensor in Patent Document 1, the straightness measurement by specifying an incident position of the laser beam must be impractical. In pursuing the energy peak position of the beam as the incident position thereof, for example, because the energy difference around the peak is moderate, it is considered to specify the center of the half-energy width and regard it as the incident position of the beam. However, the center position could change only by slight asymmetricity of the laser beam energy distribution. While the incident position change of the beam must be specified on the submicron order to measure straightness on a submicron order, the half value width is one to several millimeters as described. Doubtlessly it is impractical to detect an incident position change of a beam having one-to-several-millimeters diameter on a submicron order.

The present invention was invented to solve the described problems in straightness measurement, and has the object of providing a technology capable of submicron-order straightness measurement that has not been achieved by conventional straightedges.

### [Means for solving the problem]

To solve the described problem, this specification discloses a standard-light generator for straightness measurement. The standard-light generator according to the disclosed invention has a light source, and a light shielding plate disposed at a position irradiated with light from the light source. In this standard-light generator, the light shielding plate has a circular-ring-shaped light transparency slit. The light source is disposed on a slit axis through the center of the circumference of the light transparency slit and perpendicular to the light shielding plate, and directed so that the whole area of the light transparency slit is irradiated with light from the light source.

To solve the described problem, this specification further discloses a method of providing a standard for straightness measurement. The method according to the disclosed invention has a disposition step. In the disposition step, a light source is disposed to a circular-ring-shaped slit provided in a light shielding plate at a position on a slit axis through the center of the circumference of the circular-ring-shaped slit and perpendicular to the light shielding plate, so that the whole area of the light transparency slit is irradiated with light from the light source.

The method further comprises:
a first observation step of irradiating the whole area of the light transparency slit with light from the light source, observing irradiance by diffraction light waves from the light transparency slit on a first observation plane in the emission side of the light shielding plate, and specifying a position at which the irradiance has a peak due to interference of the diffraction light waves,
a second observation step of irradiating the whole area of the light transparency slit with light from the light source, observing irradiance by diffraction light waves from the light transparency slit on a second observation plane in parallel with the first observation plane and different in distance to the light shielding plate from the first observation plane, and specifying a position at which the irradiance has a peak due to interference of the light diffraction light waves, and
a third observation step of irradiating the whole area of the light transparency slit with light from the light source, observing irradiance by diffraction light waves from the light transparency slit on a third observation plane in parallel to the first and second observation planes and different in distance to the light shielding plate from the first and second observation planes, and specifying a position at which the irradiance has a peak due to interference of the diffraction light waves.

In the standard-light generator according to the disclosed invention, the light source may be a substantially-single-wavelength light source, may be a coherent light source, otherwise may be a laser source. In the standard-light generator according to the disclosed invention, the light shielding plate may have a structure where light is diffused for shielding at areas excepting the light transparent slit.

The standard-light generator according to the disclosed invention may have the configuration where
the light shielding plate has a substrate transparent to light from the light source and a shielding film formed on the substrate, and
the shielding film having the circular-ring-shaped light transparency slit is formed on the emission side surface of the substrate.

The standard-light generator according to the disclosed invention may have the configuration where the interface between the shielding film and the substrate is a diffusing surface in the light shielding plate.

In the standard-light generator according to the disclosed invention, an optical element to reduce the divergence angle of light from the light source may be disposed on the incident side of the light shielding plate. This optical element may be a condenser lens.

To solve the described problem, this specification further discloses a straightness measurement apparatus. The straightness measurement apparatus according to the disclosed invention has the disclosed standard-light generator for straightness measurement, a photoreceiver disposed on the emission side of the standard-light generator, and a process unit capable of executing data processing for straightness measurement. The photoreceiver is capable of outputting an energy distribution of incident light in at least one dimension. The process unit is capable of executing data processing to measure straightness by specifying a position at which the incident light has an energy peak in the output energy distribution. This straightness measurement apparatus may have a displacement mechanism capable of displacing the photoreceiver in a length direction of a long object as the photoreceiver is in contact with a surface of the object while the standard-light generator is in a stationary state.

### [Effect of the Invention]

According to the disclosed standard-light generator, the disclosed method of providing a straightness measurement standard, or the disclosed straightness measurement apparatus, not a standard achieved by machining such as straightedge but a standard achieved optically is provided as described below. The straightness measurement according to the invention specifies the center position of a diffraction-interference beam pattern that is formed inherently by interference of diffraction waves, not specifying simply the center position in the cross section of a laser beam. Accordingly, the center position of a much smaller beam pattern is specified to utilize as a standard. Because of this, the standard is highly reliable. This measurement technique is free from measurement accuracy decrease even in a longer-range straightness measurement, being capable of measuring straightness with high accuracy over a longer length. The structure where the light shielding plate diffuses light for shielding at area excepting the light transparent slit prevents the problem that the reflected light returns to the light source to damage, and the problem that the light reflection causes stray light deteriorating S/N ratio in measurements. In addition, this structure prevents the problem that thermal absorption raises the temperature of the light shielding plate to cause a refractive index thermal fluctuation, which could shift the interfering position of diffraction waves. Accordingly, the standard is more reliable in this respect.

The structure where the shielding film formed on the emission side of the substrate has the light transparency slit in the light shielding plate has the advantage of not being affected by a temperature uniformity decrease in the substrate, because diffraction waves from the slit do not pass through the substrate. Accordingly, the standard is more reliable in this respect as well. In this, the configuration where a diffusing surface is formed at the interface between the substrate and the shielding film can prevent the shielding film from being heated to raise the temperature in a forward space. Accordingly, the standard is free from the reliability decrease due to the refractive index thermal fluctuation in the space.

The configuration where an optical element to reduce the divergence angle of light from the light source is disposed on the incident side of the light shielding plate makes peak positions easier to specify, avoiding measurement accuracy decrease, because irradiance peaks by interference of diffraction light waves in beam patterns are enhanced.

### [Brief description of the drawings]

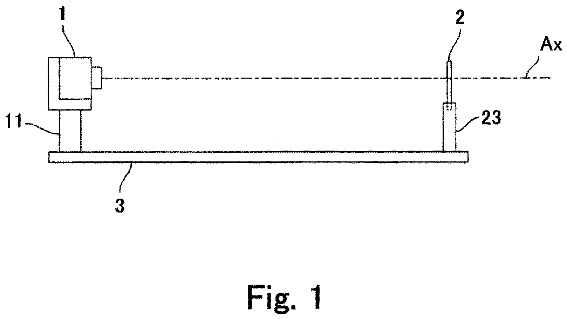

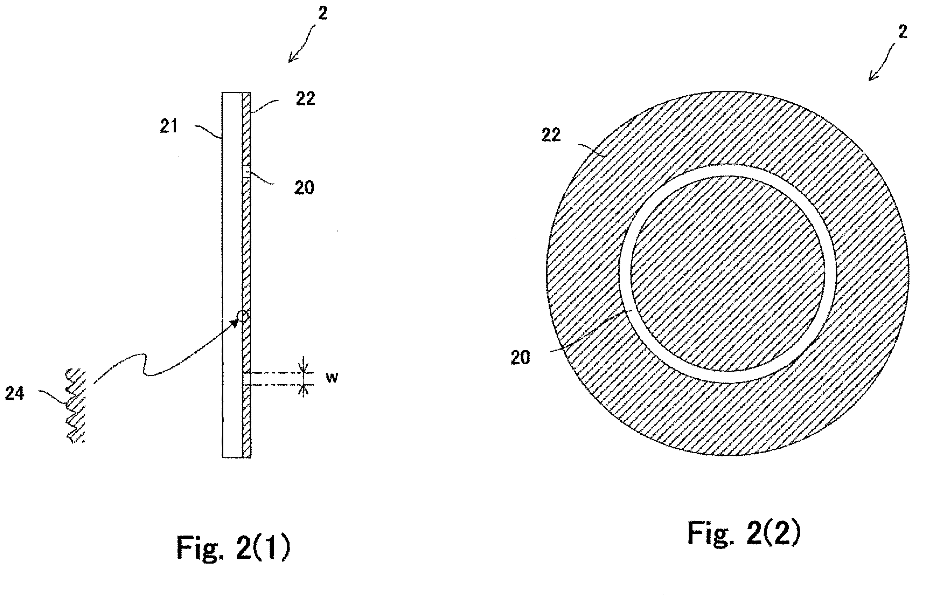

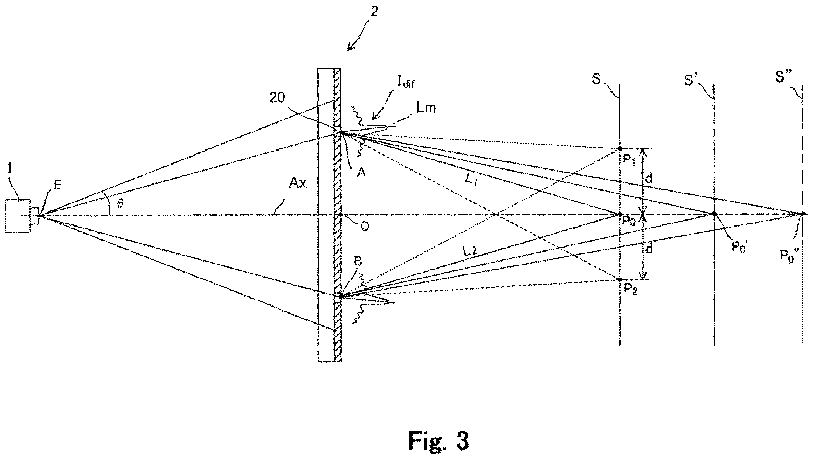

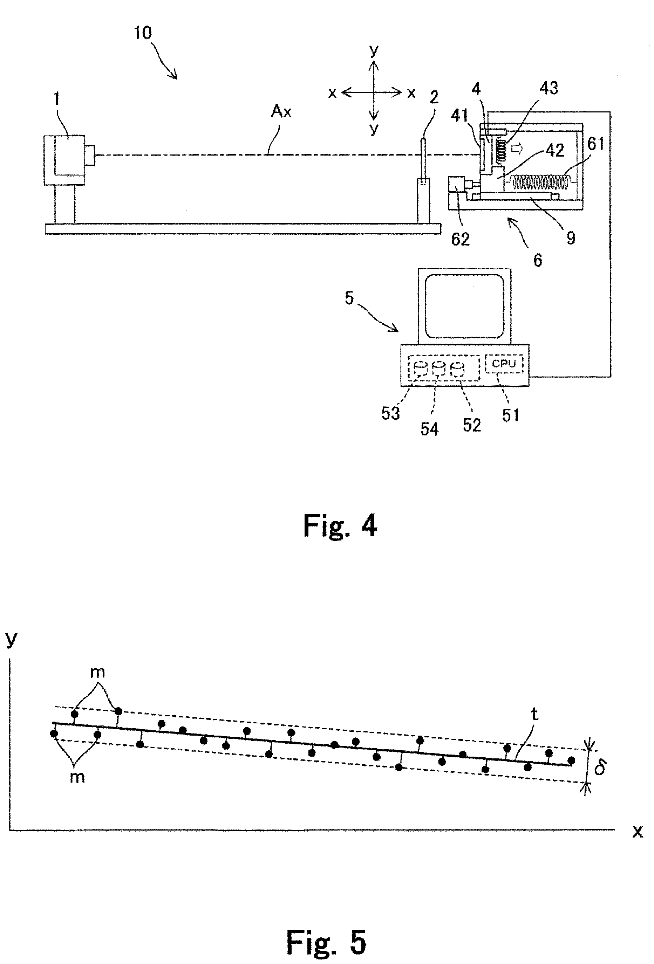

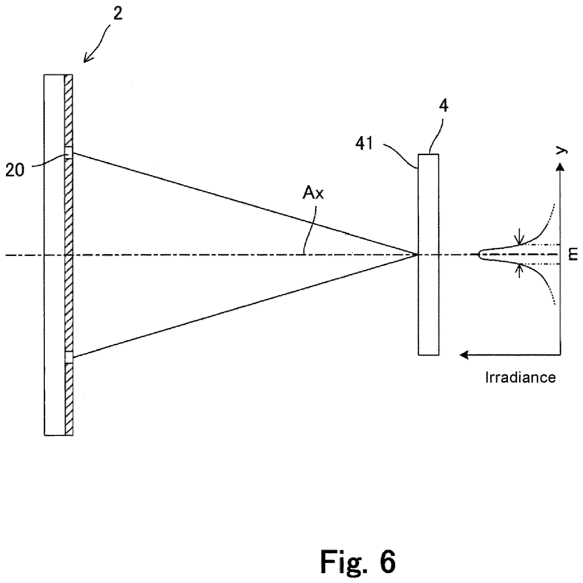

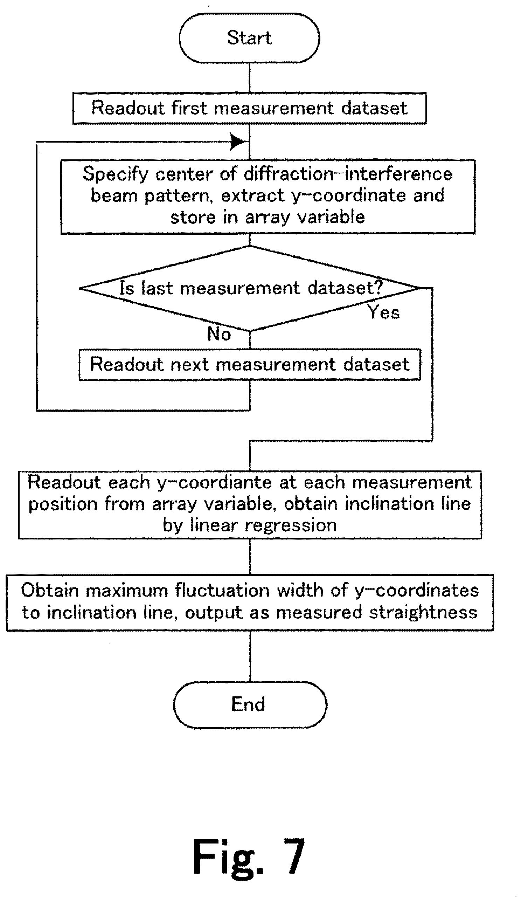

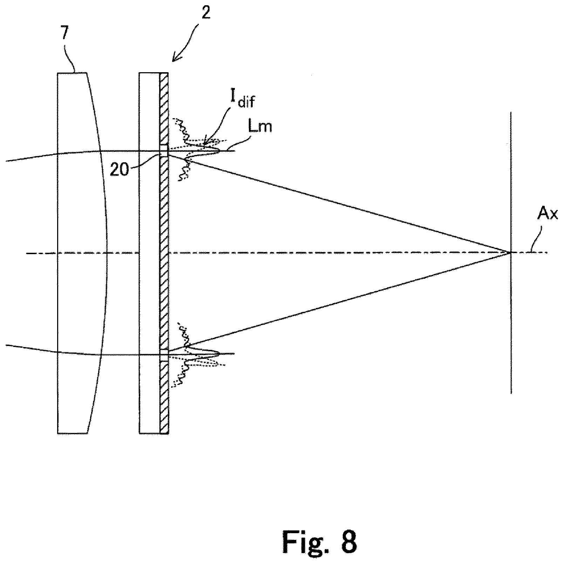

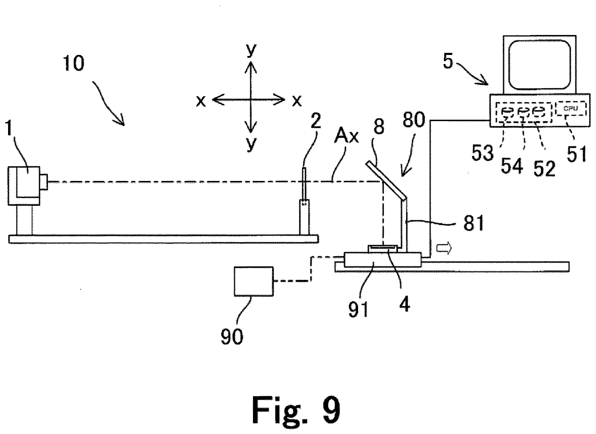

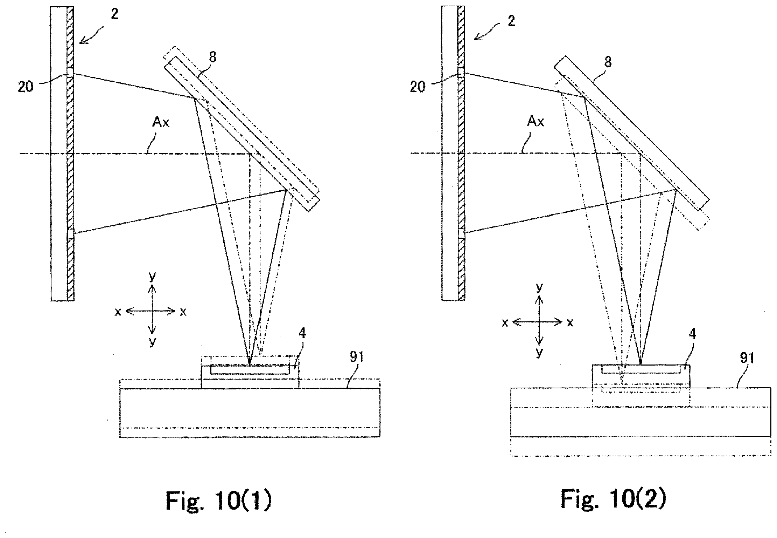

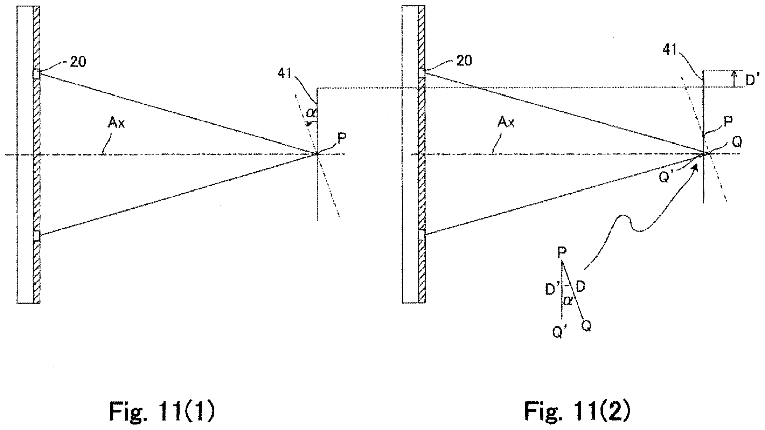

Fig. 1 is a figure showing a rough configuration of a standard-light generator for straightness measurement according to the first embodiment. Fig. 2 shows schematic views of a light shielding plate, where Fig. 2(1) shows a cross-sectional view, and Fig. 2(2) shows a front view. Fig. 3 is a schematic view showing an operation (operation principle) of the standard-light generator according to the embodiment. Fig. 4 is a front schematic view of the straightness measurement apparatus according to the first embodiment. Fig. 5 is a schematic view showing a straightness measurement using the straightness measurement apparatus according to the first embodiment. Fig. 6 is a schematic view showing a peak position in the straightness measurement. Fig. 7 is a flow chart showing the configuration of a straightness measurement program. Fig. 8 is a schematic view of the main part in the standard-light generator according to the second embodiment. Fig. 9 is a front schematic view of the straightness measurement apparatus according to the second embodiment. Fig. 10 is a schematic view showing a straightness measurement using the straightness measurement apparatus according to the first embodiment. Fig. 11 is a schematic view showing a measurement when the incident surface of the photoreceiver is tilted to the light shielding plate.

### [Embodiments in practicing the invention]

Embodiments in practicing the invention are described as follows. First, described are standard optical generators for straightness measurement according to embodiments. The following description contains a description on a method of providing a straightness measurement standard according to an embodiment. Fig. 1 shows the schematic configuration of a standard-light generator according to the first embodiment.

The standard-light generator shown in Fig. 1 is a device generating light that can be adopted as a standard in measuring straightness. This standard-light generator has a light source 1, and a light shielding plate 2 disposed at a position to receive light from the light source 1. Any kind of light source may be used as the light source 1. In this embodiment, a semiconductor laser source is used because of its easiness in handling and high performance in luminance. A semiconductor laser source of about 400-420 nm wavelength such as GaN-based laser source, for example, can be used. The laser source 1 emits a laser beam with a divergence angle **θ**. In this embodiment, the divergence axis (direction of zero-degree divergence) is horizontal.

Fig. 2 is a schematic view of the light shielding plate 2, where Fig. 2(1) shows a cross-sectional view, and Fig. 2(2) shows a front view. The light shielding plate 2 has a circular-ring-shaped light transparency slit 20 as shown in Fig. 2. Concretely, the light shielding plate 2 has a substrate 21 transparent to light from the light source 1, and a shielding film 22 formed on the substrate 21. The shielding film 22 forms the circular-ring-shaped light transparency slit 20.

Any plate can be used as the substrate 21 as far as formed with a material having a high enough transparency to the emission wavelength of the light source 1. A vitreous-silica plate such as fused-silica plate is used as the substrate 21 in this embodiment. Vitreous silica, which has high light transmissibility over broad wavelength bands of UV, visible and IR, is preferably adopted as the material of the substrate 21 because of the low photo-absorption which might cause a temperature increase. Alternatively, a substrate made of borosilicate glass can be used.

A chromium film is adopted as the shielding film 22 in this embodiment, while any material having enough shielding property to the emission wavelength of the light source 1 can be used. The shielding film 22 is formed on the substrate 21 by such an appropriate process as vapor deposition or sputtering.

As shown in Fig. 1, the light source 1 is held by a bracket 11, and the light shielding plate 2 is installed on a mount 23. The bracket 11 and the mount 23 are fixed on a base 3. The light source 1 is disposed on an axis intersecting perpendicularly the light shielding plate 2 at the center of the circumference of the light transparency slit 20. This axis, which is shown with "Ax" in the figures, is hereafter referred as "slit axis". While the light source (semiconductor laser source) 1 is installed as the divergence axis is directed horizontally as described, the light source 1 may be directed in any direction as far as the whole area of the light transparency slit 20 is irradiated with light therefrom. The upright attitude of the light shielding plate 2 in Fig. 1 is not indispensable either. If the light shielding plate 2 is tilted, the slit axis Ax is not the horizontal. This arrangement is also adoptable as far as the whole area of the light transparency slit 20 is irradiated with light from the light source 1 disposed on the slit axis Ax.

Operation (function principle) of the standard-light generator in this embodiment is described referring to Fig. 3. Fig. 3 is a schematic view showing the operation of the standard-light generator in the embodiment. As shown in Fig. 3, the diameter of the light transparency slit 20 is smaller than that of the light beam pattern on the light shielding plate 2. The laser light source 1 emits a laser beam with a divergence angle **θ**. Under the divergence angle **θ**, the pattern of the beam reaching the light shielding plate 2 contains the whole area of the light transparency slit 20 as shown in Fig. 3. Fig. 3 could be different from an actual configuration in the dimensional ratio. In Fig. 3, the reduced scale on the emission side of the light shieling plate 2 might be different from that on the emission side.

A part of the light beam reaching the light shielding plate 2 passes through the light transparency slit 20 and emits therefrom. The rest of the beam is shielded by the light shielding plate 2, diffusing at the interface of the shielding film 22 and the substrate 21. The width of the light transparency slit 20, which is the length in a diameter direction and shown with **"w"** in Fig. 2, is very narrow, e.g., 40 µm or so. Diffraction appears prominently among light waves emitting from the light transparency slit 20. A schematical energy distribution of the emitting light including diffraction waves is shown with "**I_{dif}**" in Fig. 3. As shown in Fig. 3 with **I_{dif}**, each diffraction wave propagating at each diffraction angle distributes on both sides of a chief ray Lm.

The cross section of the light shielding plate 2 shown in Fig. 3 is along a diameter direction, that is, includes the center of the circumference of the circular-ring-shaped light transparency slit 20. The center of the circumference is shown with **"O"** in Fig. 3. Because the light shielding plate 2 is installed uprightly, that is, because the cross section is vertical, the cross section seems to have a couple of slits at an upper and lower positions. This light transparency slit 20 has the equal width **w** along the circumference. In the slit cross section, accordingly, the distance from the center of the upper slit (i.e., center in the slit width) to the circumference center **O** is equal to the distance from the center of the lower slit to the circumference center **O.**

For convenience of description, the center of the upper slit is referred as "point **A**", and the center of the lower slit is referred as "point **B**". Now, imagined is a plane **S** in parallel to the light shielding plate 2. It is irradiated with diffraction waves from the light transparency slit 20. One emission point in the light source is referred as **"E".** As shown in Fig. 3, the emission point **E** is on the slit axis Ax, and the slit axis **Ax** intersects perpendicularly the light shielding plate 2 at the center **O** of the circumference of the light transparency slit 20. In the observation plane **S,** the position at which the slit axis **Ax** intersects is referred as "**P₀**". Among light waves emitted from the emission point **E,** considered are a light wave **L₁** that reaches the point **A,** diffracts therefrom and then reaches the position **P₀** as the diffraction wave, and a light wave **L₂** that reaches the point B, diffracts therefrom and then reaches the position **P₀** as the diffraction wave. Because **EA=EB** and **AP₀=BP₀**, each optical path length of **L₁** and **L₂** is equal. Thus, **L₁** and **L₂** are from the same point **E,** and both contain components of the same phase and the same wavelength. Therefore, **L₁** and **L₂** interfere strongly at the position **P₀**, increasing the irradiance at the position **P₀** prominently. Interference of light waves is weak at positions other than **P₀** even if those have the same wavelength, because those phases are not the same due to the difference in optical path lengths. When **P₁** and **P₂** are the positions where the phase difference of two reaching diffraction waves is just a half of the wavelength, each component having the same wavelength attenuates each other by the interference, making the irradiance minimum at **P₁** and **P₂** due to the half-wavelength difference of phase. That is, intensity of diffraction waves is minimum due to the interference at **P₁** where the optical path difference between **P₁A** and **P₁B** is a half of the wavelength, and intensity of diffraction waves is minimum due to the interference at **P₂** where the optical path difference between **P₂A** and **P₂B** is a half of the wavelength.

**P₁** and **P₂** have the equal distance from **P₀**. When this distance is **d** as shown in Fig. 3, some waves have the same phase at points further distant from **P₁**, **P₂** with **d** because of the phase difference of just the wavelength. However, interference is not as strong as at **P₀**. This is because the light transparency slit 20 is circular-ring-shaped. That is, this is because diffraction waves from many other points than the points **A, B** in the slit 20 do not have the same phase at the further distant points with **d,** whereas diffraction waves from **A, B** have the same phase at those points. Only at **P₀**, any diffraction waves emitting out from any points in the circumference of the slit 20 have the same phase and thus interfere.

As described, on the emission side of the narrow-width circular-ring-shaped light transparency slit 20, strong interference of diffraction waves takes place only at the on-axis position **P₀** having the equal optical path length from the light source 1, giving a peak to the light energy distribution on the observation plane S. Because the strong interference takes place only at **P₀** whereas no interference or just a weak interference takes place at other positions, a highest-irradiance beam pattern is formed at **P₀**. The size of this beam pattern, which depends on such a parameter as width **w** of the light transparency slit 20, is much smaller than beams from general laser sources such as semiconductor laser sources. This beam pattern is hereafter referred as "diffraction-interference beam pattern" in this specification.

Distribution of diffraction waves from a slit such as the light transparency slit 20 can be known by an analysis according to the Kirchhoff's diffraction formula. The analysis includes an approximation calculation under given parameters such as slit width and wavelength. Software products for such analysis are commercially available. Accordingly, it can be known by a simulation using a software product how large a diffraction-interference beam pattern is in the standard-light generator of the embodiment.

In a simulation under the condition where the wavelength of light from the light source 1 was 405 nm, the width **w** of the light transparency slit 20 was 40 µm, the size of the light transparency slit 20 (i.e., the diameter of the circumference at the center of the width **w**) was 10 mm, and the distance from the light source 1 to the light shielding plate 2 was 100 mm, for example, the diameter of the diffraction-interference beam pattern at the observation plane distant 2 m from the light shielding plate 2 was approximately 50 µm. That is, the beam pattern was made 1/20 smaller or less compared to sizes of conventional beam patterns, e.g., 1 to several mm, by general laser sources without modification. This means that the center position thereof can be specified with high accuracy.

Because the center position of the diffraction-interference beam pattern is based on the geometrical relationship of the light source 1 and the circular-ring-shaped light transparency slit 20, it does not change even when the observation plane S is displaced to a plane having a different distance to the light shielding plate 2, keeping the concentricity, as far as the light source 1 is located on the slit axis Ax, and as far as the attitude of the light transparency slit 20 is not changed. That is, centers of diffraction-interference beam patterns locate at positions **P₀'**, **P₀**" having the same concentricity even when the observation plane is displaced to **S', S"** having different distances to the light shielding plate 2. In other words, if a line interconnecting each center position of each diffraction-interference beam pattern on each shifted observation plane **S, S', S"** is drawn, it is inherently straight. Thus, coordinates of each center position of each diffraction-interference beam pattern on each observation plane **S, S', S"** can be a standard of straightness.

The following is a description on straightness measurement using the standard-light generator under the above principle. The following includes descriptions on apparatuses and methods for straightness measurement according to embodiments. Fig. 4 is a front schematic view of a straightness measurement apparatus according to the first embodiment. As shown in Fig. 4, this straightness measurement apparatus has a standard-light generator 10, a photoreceiver 4 disposed on the emission side of the standard-light generator 10, and a process unit 5 to carry out data processing for straightness measurement. While the photoreceiver 4 has only to output an incident-light energy distribution at least in one dimension, an area image sensor such as CMOS or CCD is used as photoreceiver 4 in this embodiment.

The incident surface 41 of the disposed photoreceiver 4 is in parallel to the light shielding plate 2. In this example, the incident surface 41 is vertical because the light shielding plate 2 is held uprightly. A mount 42 holds the photoreceiver 4 to keep this attitude. In the following description, the direction of the slit axis Ax is "x-direction", and the vertical (up-and-down) direction is "y-direction". The horizontal direction perpendicular to x-direction is "z-direction". The arrangement of pixels in the incident surface 41 is square where the array directions correspond to y-directions and z-direction respectively, though this is not indispensable.

A displacement mechanism 6 is provided to the photoreceiver 4. The displacement mechanism 6 is capable of moving the photoreceiver 4 along a surface of a long object 9 to change the location of the photoreceiver 4 in the length direction of the object 9 for straight measurement. In this embodiment, for example, the displacement mechanism 6 includes an elastic element 61 installed to the mount 42 as the pushing-out function by the elasticity is directed horizontally, and a pusher (e.g., linear driver including a motor) 62 that pushes the mount 42 on the side opposite to the elastic element 61 to move the photoreceiver 4, resisting the elasticity of the elastic element 61. A restraining element 43 to make the mount 42 contact the surface of the object 9 by pressing is provided so that the mount 42 moves tracing (i.e., keeping the contact with) the surface of the object 9. As shown in Fig. 4, for example, an elastic element that presses the photoreceiver 4 slightly towards the surface of the object 9 is provided as the restraining element 43. In the mount 42, a smooth surface treatment may be carried out onto the bottom surface, which is made contact to the surface of the object 9, for the smooth sliding. Otherwise, any member having a smooth sliding surface may be stuck thereon. A stopper (symbol omitted in Fig. 4) is provided to prevent the object 9 from moving.

The process unit 5 is configured, for example, using a general-use computer such as PC including a processor 51 and a storage (e.g., memory) 52 in which kinds of programs executed by the processor 51 are stored. One of the programs stored in the storage 52 is a straightness measurement program 53 to execute data processing for straightness measurement. As another program, stored in the storage 52 is a sequence control program 54 to control the whole operation of the apparatus including the displacement mechanism 6.

Configuration of the straightness measurement program 53 and operation of the straightness measurement apparatus are described referring to Figs. 5-7. Fig. 5 is a schematic view showing a straightness measurement operation in the straightness measurement apparatus in the first embodiment. Fig. 6 is a schematic view showing a peak position in the straightness measurement operation. Fig. 7 is a flow chart schematically showing configuration of the straightness measurement program 53. The sequence control program 54 includes a code to carry out a sequence where the displacement mechanism 6 displaces the photoreceiver 4 in a horizontal direction to change the location of the photoreceiver 4 while the light source 1 is turned on. The moving direction of the photoreceiver 4 is the length direction of the long object 9. Some light waves emitted from the light source 1 pass through the light transparency slit 20 of the light shielding plate 2 to be diffraction waves and then reach to the incident surface 41 of the photoreceiver 4. In each measurement on each observation plane as described, each incident-waves energy distribution within the incident surface 41 includes a peak (i.e., peak irradiance) concentrically on the slit axis Ax. In Fig. 5, peak positions are shown with **"m"** as positions within the incident surface 41 of the photoreceiver 4.

The sequence control program 54 includes a code to operate the displacement mechanism 6 to locate the photoreceiver 4 on three or more different observation planes by moving it in the length direction of the object 9 and make the photoreceiver 4 output measurement data on those planes. Practically, the photoreceiver 4 is located on, for example, several tens or more different observation planes at every preset measurement pitch. Position of the photoreceiver 4 when measurement is carried out is hereafter referred as "measurement position". Each piece of measurement data from the photoreceiver 4 at each measurement position includes each two-dimensional irradiance distribution. Each piece of two-dimensional irradiance distribution data at each measurement position is referred as "measurement dataset".

The sequence control program 54 includes a code to execute the straightness measurement program 53 after making the photoreceiver 7 output each measurement dataset as the photoreceiver 4 is located at each measurement position in order by the displacement mechanism 6. Each measurement dataset at each measurement position is memorized in the memory. The straightness measurement program 53 includes a code to read out the first measurement dataset and specifies the center of the diffraction-interference beam pattern. In this, because the diffraction-interference beam pattern is usually larger than the pixel size, a group of pixels receiving the diffraction-interference beam pattern are specified, and the center of the pixel group is calculated. More concretely, maximum intensity (irradiance) among the pixels of the group receiving the diffraction-interference beam pattern is specified, and a further pixel group where the irradiance is more than the half of the maximum is re-specified. Thus, the center coordinates in the re-specified pixel group are specified.

While the specified coordinates are y-z coordinates in the photoreceiver 4 that is a two-dimensional image sensor, the y-coordinate, i.e., position in y-direction, is extracted because the y-direction position expresses the straightness. A specified y-z-coordinate position is hereafter referred as "pattern center position". The value of y-coordinate of the pattern center position is calculated according to the pixel size and pixel pitch of the photoreceiver 4. The straightness measurement program 53 includes a code to store the extracted pattern center position in a variable (array variable). The straightness measurement program 53 executes the code onto all measurement datasets, storing each specified pattern center position in each array variable respectively. If the pixel array directions are not y-z directions, the angle difference of the pixel array directions from y-z directions (i.e., tilt angle of the photoreceiver 4) is given as a constant in advance. In this case, the y-coordinate value of a pattern center position is obtained after the coordinate system conversion is carried out using the constant.

If the surface of the object 9 is completely straight, because the photoreceiver 4 is displaced along the straight line by the displacement mechanism 6, each pattern center position is at the same y-z coordinates as described. However, the surface of the object 9 can never be completely straight, being uneven in flatness. Therefore, each pattern center position has different y-z coordinates at each measurement position. This situation is shown in Fig. 5.

In Fig. 5, the horizontal axis expresses positions in the length direction of the object 9, i.e., positions of the photoreceiver 4 displaced by the displacement mechanism 6. The vertical axis in Fig. 5 expresses positions in y-direction within the incident surface 41. Each plotted point **m** in Fig. 5 expresses each y-coordinate of each pattern center position at each measurement position. The straightness measurement program 53 includes a code to apply a linear regression (e.g., least squares method) to the y-coordinate fluctuation of specified pattern center positions, and thereby calculate the whole inclination of the object 9. In Fig. 5, the calculated inclination is shown with a line **t,** which is hereafter referred as "inclination line". The straightness measurement program 53 further includes a code to obtain each length of each line drawn from each y-coordinate **m** of each pattern center position perpendicularly to the inclination line **t,** as shown in Fig. 5. The length variation of the drawn lines expresses fluctuation of the y-coordinates **m,** i.e., fluctuation of the pattern center positions. The measurement program 53 further includes a code to obtain the maximum value **δ** of the fluctuation. This **δ** corresponds to the measured straightness. The straightness measurement program 53 ends with outputting the calculated straightness **δ** as the measurement result. The result is output to a device such as display.

The described standard-light generator, the described standard providing method or the described straightness measurement apparatus enables a straightness measurement with high accuracy exceeding the conventional measurement limits, because straightness is measured based on not a mechanically achieved standard but an optically achieved standard. In addition, center positions of much smaller beam patterns are specified in measuring, because not the center position of a just beam cross section but the center position of an inherently generated diffraction-interference beam pattern is specified. Therefore, the standard acquires a high reliability. As understood from the above description, the resolution in measuring straightness depends on the pixel size of the photoreceiver 4. Recently super-high resolution image sensors with 1 µm or less pixel sizes, e.g., ISOCELL HP3 of Samsung Electronics Co., Ltd., have been developed, realizing a straightness measurement with submicron order accuracy.

A longer straightedge has lower straightness as standard. Accordingly, measurable straightness limits for straightedges would be inevitably low in longer-range measurements, i.e., in measuring longer objects. In addition, straightedges have the problem of deflection by own weights. It would be serious in longer-range measurements. By contrast, the standard-light generator in this embodiment is free from these problems because it provides a standard by light, enabling highly accurate straightness measurements without depending on the length of objects. In measuring straightness over a longer range, interfering diffraction waves have more variety of angles when those enter into the photoreceiver 4 because the measurement is carried out at more measurement positions within the longer range. In this, while intensity (irradiance) of each diffraction-interference beam pattern at each measurement position is different, each beam center position is on a straight line through the center of the circumference of the light transparency slit 20, i.e., on the slit axis Ax, not fluctuating. A small beam pattern can be obtained also by condensing a laser beam with a lens. However, the beam is thinned only at a certain distant position from the lens, diverging more and more at more distant positions. Thus, the conventional way condensing a beam with a lens cannot provide a small-sized beam pattern not depending on distance. By contrast, the standard-light generator in the embodiment enables it.

Though a source emitting light at a single wavelength is preferable as the light source 1 in the standard-light generator, even a source emitting light at multi-wavelength is employable. Among semiconductor laser sources emitting light at 405 nm wavelength, a source emitting light at wavelengths of 404 nm and 406 nm in addition to 405 nm is known. Even such a source can be employed as the light source 1. This is because light waves at 404 nm wavelength, light waves at 405 nm wavelength and light waves at 406 nm respectively interfere at the same point on the slit axis Ax where each optical path length from each position in the light transparency slit 20 is equal. Though the outline of a diffraction-interference beam pattern formed by multi-wavelength light waves tends to be blurred, through simulations the inventors have confirmed that it does not affect the straightness measurement accuracy. Accordingly, such a light source may be regarded as one emitting substantially-single-wavelength light waves.

Even when the light source 1 is neither one emitting single-wavelength waves nor one emitting several-wavelength waves, the invention can be practiced. Even a source emitting light waves having a continuous spectrum within a broad wavelength band can be employed in practicing the invention. Even light waves emitted from a certain point on such a light source propagate via the light transparency slit 20 along the optical paths having an equal length and then reach to a position on the slit axis Ax. Some of those waves have the same wavelength and thus inherently interfere because of having the same phase, forming an irradiance peak on the slit axis Ax. Still, a single-wavelength light source is rather preferable because high-contrast irradiation peaks are formed. High-contrast irradiation peaks are easier to specify those positions, enabling more accurate straightness measurements. "Single wavelength" means substantially single in wavelength. As far as a source provides this advantage, it is a substantially-single-wavelength source. Showing one example, a 0.405 µm wavelength (main wavelength) semiconductor laser employed as the light source 1 in the embodiment has a lot of emission wavelengths within in the ±0.001 µm band, e.g., 0.404 µm, 0.405 µm, 0.406 µm. Even such a light source does not affect the measurement accuracy, being regarded as substantially-single-wavelength source.

In the described standard-light generator, the structure where the light shielding plate 2 has the shielding film 22 on the emission side surface of the substrate 21 particularly has the advantage of enhancing the reliability of generated light waves as the standard. This point is described as follows. In measuring straightness by detecting a fine surface unevenness, e.g., 1 µm or less, even a slight optical condition non-uniformity in the optical path could cause a problem. One typical condition non-uniformity is thermal fluctuation of refractive indexes. If the shielding film 22 is formed on the incident side surface of the substrate 21, it means the light transparency slit 20, through which diffraction waves pass to emit, exists on the incident side surface of the substrate 21. In this structure, if any factor causes a temperature difference in the substrate 21, making it non-uniform in temperature, each substantial optical path length in the substrate 21 for each diffraction wave out of the light transparency slit 20 could be different from each other. If this happens, those diffraction waves do not interfere on the slit axis Ax, interfering at a position out of the slit axis Ax. By contrast, the structure where the shielding film 22 is formed on the emission side surface of the substrate 21 is free from this problem. Medium in the emission side space of the light shielding plate 22 is atmosphere (air), which causes no temperature difference, otherwise causes a temperature difference much smaller than in the substrate 21. Accordingly, this structure is free from the problem of temperature nonuniformity in the substrate 21.

In the described configuration of the standard-light generator, moreover, the structure where the light shielding plate 2 diffuses light excepting the light transparency slit 20 provides the advantage of enhancing measurement reliability, avoiding the problem of refractive-index thermal fluctuation. The light shielding plate 2, which passes light waves arriving the light transparency slit 20 and shields other waves arriving other areas, may perform shielding by reflection or by absorption. However, shielding by reflection has the problem that the reflected light waves could damage the light source 1. The reflected light is further reflected on other parts in the vicinity, generating stray light, which could enter the photoreceiver 4 to cause a noise.

Shielding by absorption, on the other hand, has the problem of raising the temperature. The shielding film 22 formed of a light absorption material for shielding may release radiant heat when the temperature thereof is raised by the light absorption. The released radiant heat warms the atmosphere in the fore space, easily causing the problem of thermal fluctuation therein. That is, the refractive index in the space is made nonuniform by the heat. In the function of the standard-light generator shown in Fig. 3, if the atmosphere on the emission side of the light shielding plate 2 has a temperature difference between upper and lower regions, the lengths of optical paths through the regions are substantially different due to the difference of the refractive index. As a result, strong interference would take place at a position out of the slit axis Ax. If the spatial temperature condition is temporally stable, that is, if the spatial temperature difference is constant during a measurement operation as the photoreceiver 4 is displaced, it would not be serious because diffraction-interference beam patterns are caught on constant coordinates within the incident surface 41. However, thermal fluctuations take place randomly, easily deteriorating the measurement accuracy.

Considering these points, the standard-light generator in the embodiment has the configuration of shielding light waves by diffusion except waves passing through the transparency slit 20. Further in this embodiment, the diffusion is achieved by the structure where the interface between the substrate 21 and the light shielding film 22 is a diffusion surface 24. Light waves reflected on the light shielding film 22, which is a reflector, diffuse on the diffusion surface 24 and then emit from the opposite side surface of the substrate 1. Because of shielding by the diffusion, this structure is free from the problem of damaging the light source 1 by returning light waves, the problem of deteriorating the S/N ratio by stray light waves, and the problem of deteriorating the measurement accuracy by a thermal fluctuation in the space. Because temperatures in the measurement environment may increase not a little just after turning the light source 1 on, it is preferable to start a measurement after waiting for the temperatures in the measurement environment having stabilized.

In some kinds of structures to diffuse light, the standard-light generator in the embodiment employs a structure preferable in preventing stray-light generation. Though it is considered, for example, to employ the structure where a light diffusion material is dispersed in the substrate 21 for light diffusion, some diffusing light waves may emit from the light transparency slit 20 as stray light waves, easily deteriorating the measurement accuracy. Alternatively, the incident surface of the substrate 21 may be a diffusing surface excepting the circular-ring-shaped area facing to the light transparency slit 20. In this structure, the incident-side diffusion surface, which is not a reflection surface, may allow some incident light waves to pass through, easily generating stray light waves emitting from the light transparency slit 20 as well. In the structure where the emission-side surface of the substrate 21 is the diffusion surface 24 on which the reflection film (shielding film 22) is formed, light waves having diffused on the diffusion surface 24 do not pass the light transparency slit 20 to emit, not becoming stray light reaching the photoreceiver 4.

It is preferable to determine size (fineness) of each bump and recess in the diffusion surface 24 in consideration of the wavelength of light from the light source 1. If the surface 24 has a roughness closely as fine as the wavelength, it could not function as a diffusion surface, allowing light waves to pass through. Accordingly, the surface 24 preferably has a roughness coarse enough compared to the wavelength. The diffusion surface 24 is obtained by carrying out a surface roughening process onto the emission-side surface of the substrate 21 excepting the area to form the light transparency slit 20 and then forming the shielding film 22 thereon.

A standard-light generator according to the second embodiment is described next. Fig. 8 is a schematic view of a main part in the standard-light generator according to the second embodiment. A difference of the standard-light generator in the second embodiment from the first embodiment is that a condenser lens 7 is disposed on the incident side of the light shielding plate 2. The condenser lens 7 has a significance in increasing irradiance of diffraction-interference beam patterns to specify those center positions with higher accuracy.

As described, diffraction waves emitting from the light transparency slit 20 distribute on both sides of a chief ray Lm. In this distribution, which depends on the width w of the light transparency slit 20 and the wavelength of light from the light source 1, diffraction light waves are minor as more apart from the chief ray Lm, i.e., as wider in diffraction angle. If the chief ray Lm makes a wide angle to the slit axis Ax due to a large diameter of the light transparency slit 20, i.e., a large divergence angle of the light beam from the light source 1, diffraction waves toward the incident surface 41 would be minor. As a result, irradiance of a diffraction-interference beam pattern formed at a position on the slit axis Ax within the incident surface 41 would decrease. Because stray light and background light in the measurement environment also reach this position, the decrease of the diffraction-interference beam pattern irradiance leads to a S/N ratio deterioration, which make it difficult to catch the outline of the diffraction-interference beam pattern. As a result, the measurement accuracy would decrease.

Considering this, the condenser lens 7 is disposed on the incident side of the light shielding plate 2 in the second embodiment. As shown in Fig. 8, the condenser lens 7 refracts the chief ray Lm in front of the light transparency slit 20 to the side closer to the slit axis Ax. Due to this, the chief ray Lm through the light transparency slit 20 makes a smaller angle to the slit axis Ax. As a result, comparatively intensive diffraction waves majorly reach the incident surface 41, enhancing irradiance of the diffraction-interference beam pattern. Accordingly, the outline contrast of the diffraction-interference beam pattern is made high enough to avoid the measurement accuracy from decreasing.

As understood from Fig. 8, the condenser lens 7 is especially effective for a larger diameter of the light transparency slit 20. The condenser lens 7 is preferably disposed in using a wide-divergence-angle laser source as the light source 1 to cover a large-diameter light transparency slit 20. In view of increasing irradiance of diffraction-interference beam patterns, moreover, a lens that directs the chief ray Lm from the light transparency slit 20 toward the slit axis Ax is preferable as the condenser lens 2. That is, the condenser lens 2 preferably concentrates light from the light source 1 on the slit axis Ax. In this case, the focus point of the condenser lens 2 is determined appropriately according to a straightness measurement range. For example, a lens having a focus at the center of a straightness measurement range can be used as the condenser lens 2. Because condensed light waves obeying the geometrical optics enter the photoreceiver 2 in addition to diffraction light waves, irradiance of the condensed light waves is accumulated with irradiance of the diffraction-interference beam pattern. Even in this case, the irradiance peak by the diffraction-interference beam pattern can be observed appropriately, providing a measurement result without any problem. This is because the irradiance of the condensed light obeying the geometrical optics is not so high due to the narrowness of the light transparency slit 20.

Though the light source 1 was disposed on the slit axis Ax in each described embodiment, this disposition may mean "substantially on the slit Ax". If the light source 1 is not on the slit Ax, **EA ≠ EB** in Fig. 3. In this, if **EA** - **EB** = **k,** assuming **EA** is longer, a position to which each optical path length is equal is point **P** where **BP** - **AP = k** on the emission side of the light shielding plate 2. Irradiance of a diffraction-interference beam pattern has a peak at this position. Even when the observation plane **S** is displaced to planes **S', S"** having different distances to the light shielding plate 2, the optical path lengths are equal at positions where the distances from the point **A** are shorter just by **k** compared to the distances from the point **B.** Irradiance has peaks at these positions. A locus tracing each peak point is the locus of points whose differences in distance from the points **A, B** is constant, that is, a hyperbola. While the above is a theoretical explanation, practically the locus can be regarded as a straight line when **k** is small. Thus, an allowable limit of **k** is determined in a measurement in relation to the required measurement accuracy and the length of the measurement range.

The light source 1 has a certain finite emission area. Respecting to "substantially on the slit axis Ax", accordingly, it is allowed that at least one emission point in the emission area is on slit axis Ax. A larger emission area may include more emission points out of the slit axis Ax. Though the locus tracing irradiance peaks of diffraction-interference beam patterns by light waves from those emission points is theoretically a hyperbola, it does not affect measurements as far as the emission area is small enough. How small emission areas should be also depends on a required measurement accuracy and straightness measurement range length. When an emission area is circular-shaped, its diameter is preferably 1 mm or less, more preferably 0.1 mm or less. When an emission area is not circular-shaped, its width in the longest direction is preferably in any of these ranges.

Light sources having such small emission areas are often called "point light sources". Accordingly, it is describable "a point light source is preferable as the light source 1". In practicing the present invention, still, not a point light source but a surface light source or long light source (e.g., line light source, rod light source) can be adopted. In adopting any of these sources, a pinhole board may be disposed on the emission side thereof, converting it into a small-emission-area light source.

A straightness measurement apparatus according to the second embodiment is described next. Fig. 9 is a front schematic view of the straightness measurement apparatus according to the second embodiment. The straightness measurement apparatus shown in Fig. 9 also has a standard-light generator 10, a photoreceiver 4 disposed on the emission side of the standard-light generator 10, and a process unit 5 to carry out data processing for straightness measurement.

Whereas the straightness measurement apparatus in the first embodiment was configured to measure the surface straightness of an object along its length direction, the apparatus in the second embodiment is configured to measure the straightness of a movement, i.e., a mechanical straightness. Concretely in this apparatus, straightness is measured as the photoreceiver 4 is placed on a member (a stage 91 in this example) that is moved by a liner motion mechanism 90 as object to measure. Because the linear motion mechanism 90 functions as the displacement mechanism 6 in the first embodiment, this apparatus does not have a displacement mechanism. Instead, this apparatus has an optical element to direct diffraction waves from the light transparency slit 20 to the photoreceiver 4.

In this example, the optical element is a mirror 8. In this embodiment as well, the light shielding plate 2 is installed uprightly, and the slit axis Ax is horizontal. The mirror 8 is tilted 45 degrees to the horizontal, bending the slit axis Ax at right angle to the lower side. The mirror 8 and the photoreceiver 4 are held together by a frame 81. The frame 81 holds the photoreceiver 4 horizontally at a position right under the mirror 8, making the bent slit axis Ax intersect the incident surface 41 at almost the center thereof. Because the mirror 8 is held together with the photoreceiver 4 by the frame 81, so to speak a unit 80 including the frame 81, the mirror 8 and the photoreceiver 4 is placed on the stage 91. This unit 80 is hereafter referred as "detection unit".

In this embodiment as well, the photoreceiver 4 is connected to a process unit 5. Data processing in the process unit 5 is basically the same as in the first embodiment. Because the slit axis Ax is bent at right angle by the mirror 8 in the second embodiment, the x-coordinate value of the center coordinates in a diffraction-interference beam pattern is extracted by the straightness measurement program 53. This point is described supplementally referring to Fig. 10. Fig. 10 is a schematic view showing a straightness measurement operation in the straightness measurement apparatus in the second embodiment.

When the linear motion mechanism 90 moves linearly the stage 91 on which the detection unit 80 is placed, the light shielding plate 2 is irradiated with light from the light source 1, releasing diffraction waves from the light transparency slit 20. Those waves are reflected on the mirror 8, and then reach the photoreceiver 4. In this function as well, strong interference takes places at a position on the slit axis Ax where each optical path length from each point in the circumference of the light transparency slit 20 is equal, forming a diffraction-interference beam pattern on the incident surface 41.

The stage 91 could slightly shift up or down while the linear motion mechanism 90 moves the stage 91 in the horizontal direction. This is due to the accuracy of such an element as linear guide in the linear motion mechanism 90. The detection unit 80 could shift up or down, accompanied by an up-or-down shift of the stage 91. When the detection unit 80 shifts up as shown with a dash-dot line in Fig. 10(1), for example, the point at which the slit axle Ax intersects the mirror 8 shifts down relatively within the surface of the mirror 8. The point at which the bent slit axis Ax intersects the incident surface 41 shifts forward in x-direction, i.e., moving direction. When the detection unit 80 shifts down as shown with a dash-double-dot line in Fig. 10(2), by contrast, the point at which the slit axis Ax intersects the incident surface 41 shifts backward in x-direction. Because center positions of diffraction-interference beam patterns are all on the slit axle Ax, straightness is known by measuring the displacements (fluctuation width) of the diffraction-interference beam patterns in x-direction as well in as the first embodiment. This straightness is the maximum width of fluctuations to the inclination line, being obtained by a linear regression.

In this case, the inclination means an inclination to the portion of the slit axis Ax between the light shielding plate 2 and the mirror 8. If the slit axis Ax of this portion is precisely horizontal because the light shielding plate 2 is precisely vertical, the inclination is an angle to the horizontal. A certain inclination angle means that the stage 91 has moved diagonally upward or downward as a whole during the measurement. Therefore, the inclination angle calculated in measuring the straightness evaluates the direction accuracy of the linear motion mechanism 90. This point is the same as in the described first embodiment. In the first embodiment, a measured inclination clarifies whether the object was held horizontally, that is, whether the surface to measure straightness is horizontal as a whole. In measuring, unless the direction accuracy of the linear motion mechanism 90 needs to be known, otherwise unless whether the object is held horizontally needs to be known either, the slit axis Ax does not need to be precisely horizontal, or the light shielding plate 2 does not need to be precisely vertical either.

The described straightness measurement apparatus is applied to kinds of devices processing workpieces placed on stages movable by linear motion mechanisms. In the field of exposure process, for example, a direct-imaging exposure device is known. This exposure device forms an exposure pattern by using a spatial light modulator such as DMD (Digital Mirror Device), and exposes a workpiece placed on a stage to the formed pattern as the stage is transferred through the area being irradiated with the pattern. In this device, accordingly, the straightness in transferring the stage much affects the exposure quality, needing a highly accurate straightness measurement. The described straightness measurement apparatus can be applied to such use.

In each straightness measurement apparatus in each embodiment, though the photoreceiver 4 is preferably disposed optically in parallel to the light shielding plate 2, it does not have to be in parallel in practicing the invention. "Optically in parallel" here means that the slit axis Ax intersects perpendicularly to the incident surface 41. This point is described as follows. Fig. 11 is a schematic view showing a measurement where the incident surface 41 of the photoreceiver 4 is inclined against the light shielding plate 2. Even in the structure where the incident surface 41 of the photoreceiver 4 is inclined against the light shielding plate 2, it is irradiated with diffraction waves strongly interfering at a point on the slit axis Ax, receiving a diffraction-interference beam pattern. Fig. 11 shows a situation where the photoreceiver 4 shifts due to the surface unevenness of the object in a straightness measurement.

When the photoreceiver 4 shifts, for example, upward by a protrusion on the surface as shown with a dash-dot line in Fig. 11, the center of a diffraction-interference beam pattern moves from point **P** to point **Q.** In this case, it is assumed that the center of the diffraction-interference beam pattern has moved only distance **D** from **P** to **Q** in the coordinate system on the incident surface 41. Then straightness is calculated on the distance **D.** However, the actual moving distance of the photoreceiver 4 from **P,** i.e., the actual height of the protrusion, is **D',** and **Q'** is the actual center of the diffraction-interference beam pattern if the incident surface 41 is in parallel to the light shielding plate 2. In other words, where **α** is the inclination angle of the incident surface 41 against the light shielding plate 2, **D**cos**α** for the measured **D** is the actual moving distance **D'.** An actual distance when shifts downward is calculated similarly.

As described, when the incident surface 41 of the photoreceiver 4 is not in parallel to the light shielding plate 2, straightness is measured precisely by correcting a measured value with its inclination angle **α.** The correction is not required when **α** is small enough. When **α** has a rather large value on a factor, **α** may be measured in advance and incorporated as the constant in the data processing.

Though a laser source was used as the light source 1 in consideration of its high output power and easiness in handling, any of other various light sources including a source not performing stimulated emission may be used. For example, a discharge lamp such as super-high-pressure mercury lamp may be used as the light source 1. While super-high-pressure mercury lamps emit light at various wavelengths in addition to 365 nm, 405 nm and 436 nm, any of those lamps may be used as the light source 1 with a wavelength selection filter to extract light waves having a desired wavelength. In addition, a solid-state light source such as light emitting diode (LED), super luminescent diode (SLD) or amplified spontaneous emission (ASE) light source may be used as the light source 1.

In configuring the straightness measurement apparatus, a mechanism to displace the photoreceiver 4 is not always required even when the linear motion mechanism 90 to displace the photoreceiver 4 is not provided. That is, the photoreceiver 4 may be moved by an operator's hand in practicing the invention. Even in this case, straightness is measured by the same data processing for each center position of each diffraction-interference beam pattern.

The data processing for each center position of each diffraction-interference beam pattern is the one specifying at which position within the incident surface 41 of the photoreceiver 4 each incident light energy has a peak. This is on the premise that the energy is maximum at the center of a diffraction-interference beam pattern. It is the inherence because diffraction waves interfere most strongly at the position to which each optical length from each point in the circumference of the light transparency slit 20 is equal, giving the highest energy density. Alternatively, the process unit 5 may carry out data processing to specify a pixel having output the highest value of the energy density. Either y-coordinate or x-coordinate of this pixel may be regarded as on the slit axis Ax, being used in calculating straightness.

Though the photoreceiver 4 was an area image sensor outputting a two-dimensional energy distribution of light having entered the incident surface 41 in each embodiment, it has only to output an energy distribution in at least one dimension in practicing the present invention. Accordingly, a line image sensor where pixels are arrayed in only one row may be used as the photoreceiver 4. In this case, the photoreceiver 4 is disposed so that the array direction of the pixels is directed to the depth-height direction (i.e., recess-protrusion direction in surface unevenness) in straightness measurements. In the example shown in Fig. 4, the photoreceiver 4 is held so that the array direction of the pixels is vertical, i.e., in y-direction. In the example shown in Fig. 9, the array direction of the pixels is in x-direction. In any configuration, the data processing executed by the straightness measurement program 53 specifies the center position among pixels having captured a diffraction-interference beam pattern.

In each described embodiment, much wider width **w** of the light transparency slit 20 is not preferable. When the light transparency slit 20 has a wider width **w,** a larger amount of light passes through the slit 20 and travels straight. This amount of light could reach the photoreceiver 4 after reflecting on parts in the vicinity, causing a noise. A diffraction-interference beam pattern would be hidden in this noise. Specifically, the width **w** of the light transparency slit 20 is preferably about 1/1000 to 1/10 of the diameter of the light transparency slit 20, more specifically, of the diameter of the circumference at the center of width **w,** in view of carrying out straightness measurements with high S/N ratios.

The diameter of the light transparency slit 20 is preferably determined according to measurement distances, which are distances from the light shielding plate 2 to the incident surface 41 at measurement positions. In a measurement at longer measurement distances, diffraction-interference beam patterns tend to be low in irradiance as a whole. It is, therefore, preferable to use a larger-diameter light transparency slit 20 according to longer measurement distances to increase the amount of diffraction waves as a whole so that irradiance of the diffraction-interference beam patterns is prevented from decreasing. Showing one example, the diameter of the light transparency slit 20 is preferably 1/1000 to 1/10 of measurement distances.

### [Explanation of Symbols]

- 1: Light source
- 10: Standard-light generator
- 2: Light shielding plate
- 20: Light transparency slit
- 21: Substrate
- 22: Shielding film
- 24: Diffusion surface
- 4: Photoreceiver
- 41: Incident surface
- 5: Process unit
- 6: Displacement mechanism
- 7: Condenser lens
- 8: Mirror
- 80: Detection unit
- 9: Object
- 90: Linear motion mechanism
- 91: Stage

## Claims

1. A standard-light generator for straightness measurement, **characterized by** comprising;
a light source (1), and
a light shielding plate (2) disposed at a position irradiated with light from the light source, wherein
the light shielding plate has a circular-ring-shaped light transparency slit (20), and
the light source is disposed on a slit axis (Ax) through a center of a circumference of the light transparency slit and perpendicular to the light shielding plate, and directed so that a whole area of the light transparency slit is irradiated with light from the light source.

2. A method of providing a standard for straightness measurement, **characterized by** comprising;
a disposition step of disposing a light source (1) to a circular-ring-shaped slit (20) provided in a light shielding plate (2) at a position on a slit axis (Ax) through a center of a circumference of the circular-ring-shaped slit and perpendicular to the light shielding plate, so that a whole area of the light transparency slit is irradiated with light from the light source,
a first observation step of irradiating the whole area of the light transparency slit with light from the light source, observing irradiance by diffraction light waves from the light transparency slit on a first observation plane (S) in an emission side of the light shielding plate, and specifying a position at which the irradiance has a peak due to interference of the diffraction light waves,
a second observation step of irradiating the whole area of the light transparency slit with light from the light source, observing irradiance by diffraction light waves from the light transparency slit on a second observation plane (S') in parallel with the first observation plane and different in distance to the light shielding plate from the first observation plane in the emission side of the light shielding plate, and specifying a position at which the irradiance has a peak due to interference of the light diffraction light waves, and
a third observation step of irradiating the whole area of the light transparency slit with light from the light source, observing irradiance by diffraction light waves from the light transparency slit on a third observation plane (S") in parallel to the first and second observation planes and different in distance to the light shielding plate from the first and second observation planes in the emission side of the light shielding plate, and specifying a position at which the irradiance has a peak due to interference of the diffraction light waves.

3. A standard-light generator for straightness measurement as claimed in the claim 1, wherein the light source is a single-wavelength light source.

4. A standard-light generator for straightness measurement as claimed in the claim 1, wherein the light source is a coherent light source.

5. A standard-light generator for straightness measurement as claimed in the claim 1, wherein the light source is a laser source.

6. A standard-light generator for straightness measurement as claimed in the claim 1, 3, 4 or 5,
wherein
the light shielding plate has a structure where light is diffused for shielding at areas excepting the light transparent slit.

7. A standard-light generator for straightness measurement as claimed in the claim 1, 3, 4, 5 or 6, wherein
the light shielding plate has a substate (21) transparent to light from the light source and a shielding film (22) formed on the substrate,
the shielding film has the circular-ring-shaped light transparency slit, and
the shielding film is formed on an emission side surface of the substrate.

8. A standard-light generator for straightness measurement as claimed in the claim 7, wherein
an interface between the shielding film and the substrate is a diffusing surface (24) in the light shielding plate.

9. A standard-light generator for straightness measurement as claimed in the claim 1, 3, 4, 5, 6, 7 or 8, wherein
an optical element to reduce a divergence angle of light from the light source is disposed on an incident side of the light shielding plate.

10. A standard-light generator for straightness measurement as claimed in the claim 9, wherein the optical element is a condenser lens (7).

11. A straightness measurement apparatus, comprising:
a standard light generator (10) as claimed in the claim 1, 3, 4, 5, 6, 7, 8, 9 or 10,
a photoreceiver (4) disposed on an emission side of to the standard-light generator, and
a process unit (5) capable of executing data processing for straightness measurement,
wherein
the photoreceiver is capable of outputting an energy distribution of incident light in at least one dimension, and
the process unit is capable of executing data processing to measure straightness by specifying a position at which the incident light has an energy peak in the output energy distribution.

12. A straightness measurement apparatus as claimed in the claim 11, further comprising
a displacement mechanism (6) for displacing the photoreceiver in a length direction of a long object (9) as the photoreceiver is in contact with a surface of the object while the standard-light generator is in a stationary state.
